# EUROPEAN PATENT APPLICATION

(11) **EP 4 180 308 A1**
(43) Date of publication of application: **17.05.2023**
(21) Application number: 21207504.8
(22) Date of filing: 10.11.2021
(51) Int. Cl.: B62K 19/32, B62K 21/06, B62K 21/18

(54) **BICYCLE FORK STEERER TUBE**

(71) Applicant: F.I.V. Fabbrica Italiana Velocipedi Edoardo Bianchi S.p.A., 24047 Treviglio (BG) (IT)
(72) Inventor: Borgonovo, Marco, 24047 Treviglio (IT)
(74) Representative: AWA Sweden AB

(57) **Abstract**

The present invention relates to a bicycle fork steerer tube (10), comprising: a lower portion (12); an upper portion (14); and an intermediate portion (16) tapering from the lower portion to the upper portion, wherein the upper portion extends from the intermediate portion to an upper end (20) of the bicycle fork steerer tube, and wherein the upper portion has an oval cross-section (22) throughout its length (L) from the intermediate portion to the upper end of the bicycle fork steerer tube.

## Description

### Technical field

The present invention relates to a (bicycle fork) steerer tube. The present invention also relates to a bicycle fork comprising such a steerer tube. The present invention also relates to a bicycle comprising such a steerer tube or fork.

### Background

A bicycle fork is the part of a bicycle that holds the front wheel. A fork typically comprises of two blades which are joined at the top by a fork crown. Above the crown, a steerer tube conventionally attaches the fork to the bicycle and the handlebars via a stem allowing the rider to steer the bicycle.

Many steerer tube designs have been proposed.

US2011148070 discloses a steering tube which is made as one piece with the actual forks that support the front wheel. Connecting means that connect a sleeve to the steering tube comprise a pin which extends through two diametrically opposed holes in the threaded sleeve so as to be housed in two diametrically opposed holes provided in the steering tube. When the threaded sleeve is being fitted onto the steering tube, the diametrically opposed holes in the threaded sleeve and the diametrically opposed holes in the steering tube are aligned with one another by guide means comprising at least one recess and at least one projection of complementary shape which are provided in the interface between said threaded sleeve and the steering tube. In the example illustrated in US2011148070, two recesses are provided. Each recess here consists of a flat made on the exterior face of the steering tube and in which one of the opposed holes of the steering tube is positioned. The flat is elongate and extends as far as the free end of the steering tube so as to collaborate with a projection constituting an additional thickness provided on the threaded sleeve at the site of the two diametrically opposed holes thereof.

WO2013041824A1 disclose a fork steerer tube rotatably mounted on lower headset bearing and upper headset bearing. The fork steerer tube is a substantially hollow and tubular shape with a mostly round or ellipse section shape in order to rigidly receive and mate to the lower headset bearing. The fork steerer rube has a transitional shaped form between the lower headset bearing and the upper headset bearing such that it can facilitate frame internal cables passing through upper headset bearing. FIGURE 5 in WO2013041824A1 shows a cross section passing through the upper headset bearing and perpendicular to the axis of rotation of the upper headset bearing. The fork steerer tube can be seen to have a substantially "D" shaped section comprising an outer rounded portion to receive compatibly upper headset bearing and a flattened section containing a central threaded preload hole. Frame internal cables are shown passing through the upper headset bearing outside of the "D" shape steerer tube, and fork internal cables are shown passing through upper headset bearing within the interior of fork steerer tube.

A similar design to that of WO2013041824A1 is disclosed in US2006145446. In US2006145446, rear brake, front and rear derailleur cables are routed along a flat rear face of a fork steerer tube.

US2016185414 discloses a steerer tube having an upper section and a lower section that in turn has a first or upper portion and a second or lower portion. The upper section extends from the upper end of the steerer tube to a lower end of the upper section. A segment of the upper section, adjacent to the upper end of the steerer tube, is adapted to be joined to a handlebar. The upper section has an outer surface which is circularly cylindrical throughout the length of the upper section, and an inner surface which is also circularly cylindrical throughout the length of the upper section. While said segment of the upper section is circularly cylindrical so as to be more easily compatible with a star nut (not shown), in an alternative embodiment in US2016185414, the segment of the upper section could be tapered or elliptical in cross section and still be compatible with a star nut. The upper portion of lower section has an outer surface which is frustoconical. The lower portion of the lower section of the steerer tube is characterized in that its outer surface is circularly cylindrical.

US7503576 discloses a steering tube comprised of a first proximal end, a second distal end, and a central bore, wherein a flange is located at the second distal end of the tube. There is a shoulder located close to the second distal end of the tube, which divides the steering tube into a neck which composes a small portion of the tube, and a round body portion, which composes a major portion of the tube. In an embodiment of the steering tube in US7503576, the tube neck is comprised of a round interior surface and an elliptical exterior surface. The elliptical exterior surface is designed for eliminating a potential problem of rotation of the steering tube after the tube is molded into a crown.

US2010259028 discloses a bicycle steerer tube which includes an oblong asymmetric cross section that is formed along a portion of the steerer tube. The asymmetric portion of the steerer tube has a first diameter that is generally aligned with an axis of rotation of the front wheel and a second diameter that is generally aligned with a plane of rotation of the front wheel. According to US2010259028, the first diameter is greater than the second diameter and provides lateral stiffness to the wheel assembly and the second diameter accommodates longitudinal impact absorption of the fork and wheel assembly.

US2020354011 discloses a steerer tube integrally connected to a fork bridge which is in turn integrally connected to two fork legs. The steerer tube comprises a lower area. In the lower area, a receiving opening extending in the longitudinal direction of the steerer tube is formed. The receiving opening is formed to be of a transverse oval shape. A lower end of a handlebar stem tube of protrudes into the receiving opening of the steerer tube.

US2020130772 discloses a non-uniform steerer tube comprising: an axis-symmetric outer surface; and a non axis-symmetric inner surface, said axis-symmetric outer surface and said non axis-symmetric inner surface defining a wall thickness therebetween, said wall thickness varying along an axial length of said non-uniform steerer tube.

### Summary of the invention

Despite the various steerer tube designs, there is still room for improvement.

Accordingly, it is an object of the present invention to provide an improved bicycle fork steerer tube.

According to a first aspect of the present invention, this and other objects are achieved by a bicycle fork steerer tube, comprising: a lower portion; an upper portion; and an intermediate portion tapering from the lower portion to the upper portion, wherein the upper portion extends from the intermediate portion to an upper end of the bicycle fork steerer tube, and wherein the upper portion has an oval cross-section throughout its length from the intermediate portion to the upper end of the bicycle fork steerer tube.

The present invention is based on the understanding that a steerer tube with such an oval upper portion can have an improved stiffness compared to a round steerer tube with respect to brake forces (when applied to a bicycle), which in turn can make braking performance better and more predictable. According to FEM (finite element method) analysis performed by the applicant, the present oval steerer tube is giving better stiffness result compared to a steerer tube with circular cross section in relationship to brake forces. Namely, according to the FEM analysis, the fork stiffness increases 5.5%, measured as the force applied to the front wheel axis opposite to the bicycle's moving direction, over the maximum deflection of the loading point in the same direction. This compared to a standard 28.7 mm diameter steertube, of the same length, material, and weight.

It should here be noted that in the aforementioned document US2011148070, the recess does not extend all the way to an intermediate tapering portion of the steering tube. In WO2013041824A1, fork steerer tube has a substantially "D" shaped section rather than an oval cross-section. The same is true for the fork steerer tube of US2006145446. Furthermore, in US2016185414, the segment of the upper section being "elliptical in cross section" is just the very top portion of the upper section adjacent to the upper end of the steerer tube and adapted to be joined to a handlebar, whereas the majority of the upper section of the steerer tube is circularly cylindrical. In US7503576, it is a lower tube neck rather than an upper portion that is comprised of an elliptical exterior surface, and also the tube neck has a round interior surface. In US2010259028, it is an intermediate portion of the bicycle steerer tube that is asymmetric, whereas the upper radial portion of the steerer tube appears to be round (circular cylindrical). Finally, any oval shape in US2020354011 and US2020130772 is only internal.

The oval cross-section is preferably a stadium-shaped cross-section. In other words, the upper portion preferably has a stadium-shaped cross-section throughout its length from the intermediate portion to the upper end of the bicycle fork steerer tube. A stadium (shape) may be constructed of a rectangle with semicircles (180 deg.) at a pair of opposite sides. The oval cross-section could alternatively be an elliptical cross-section or a circular cross-section with two opposing flat sides, for example.

The oval cross-section may have a major axis and a minor axis, wherein the length of the major axis is in the range of 125-135% of the length of the minor axis. This range is preferred for increasing the stiffness.

The major axis may extend in an intended plane of travel of the bicycle fork steerer tube. In other words, the major axis is usually oriented fore-aft. Expressed in another way, the major axis is generally aligned with a plane of rotation of the front wheel of the bicycle (whereas the minor axis can generally be aligned with an axis of rotation of the front wheel).

The oval cross-section may throughout the length of the upper portion form a non-circular cylindrical external surface of the upper portion and a non-circular cylindrical internal surface of the upper portion. Hence both the inside and the outside of the upper portion of the steerer tube are oval.

The oval cross-section may be uniform throughout (substantially) the complete length of the upper portion. Substantially may here be construed as >90%, preferably >95%. The upper end of the bicycle fork steerer tube/upper portion could be chamfered on the inside, for removing sharp edges and to facilitate insertion of a component into the bicycle fork steerer tube/upper portion, for example an insert. Such an insert is described in more detail in applicant's co-pending application "SYSTEM FOR FIXING A BICYCLE FORK TO A STEM", the content of which herein is incorporated by reference.

The length of the upper portion may be in the range of 3-5 cm. The exact length of the upper portion may depend on frame size of the bicycle.

The upper portion of the bicycle fork steerer tube may have a uniform wall thickness along the oval cross-section.

The lower portion may include a circular cylindrical external surface. The circular cylindrical external surface of the lower portion could advantageously match a lower bearing.

The intermediate portion may have an external surface that transitions from a circular perimeter adjoining the lower portion to an at least partly narrower oval perimeter adjoining the upper portion. That is, the intermediate portion may act as a transition between the circular lower portion and the oval upper portion.

The bicycle fork steerer tube can be made from a carbon fibre material, such as carbon fibre reinforced polymer or carbon fiber reinforced plastic or carbon fiber reinforced thermoplastic (or just carbon).

According to a second aspect of the present invention, there is provided a bicycle fork, comprising: at least one fork blade (typically two fork blades); a fork crown; and a bicycle fork steerer tube according to the first aspect.

The lower portion of the bicycle fork steerer tube may be attached to, or merge with, the fork crown.

The bicycle fork can be made from a carbon fibre material, such as carbon fibre reinforced polymer or carbon fiber reinforced plastic or carbon fiber reinforced thermoplastic (or just carbon).

The fork blade(s), fork crown, and steerer tube of the bicycle fork can be manufactured as a single piece.

According to a third aspect of the present invention, there is provided a bicycle comprising a bicycle fork steerer tube according to the first aspect or a bicycle fork according to the second aspect of the invention. The bicycle may for example be a (road) racing bike.

### Brief description of the drawings

These and other aspects of the present invention will now be described in more detail, with reference to the appended drawings showing currently preferred embodiments of the invention.
Fig. 1 is a perspective view of a bicycle fork steerer tube according to the present invention.
Fig. 2 shows the cross-section of the upper portion of the steerer tube of fig. 1.
Fig. 3 is a perspective view of a bicycle fork according to another aspect of the present invention, which bicycle fork comprises the bicycle fork steerer tube of fig. 1.
Fig. 4 is an exploded perspective view of a system for fixing the bicycle fork of fig. 3 to a stem.
Fig. 5 is a side view of a bicycle comprising the present bicycle fork steerer tube/bicycle fork.

### Detailed description of the invention

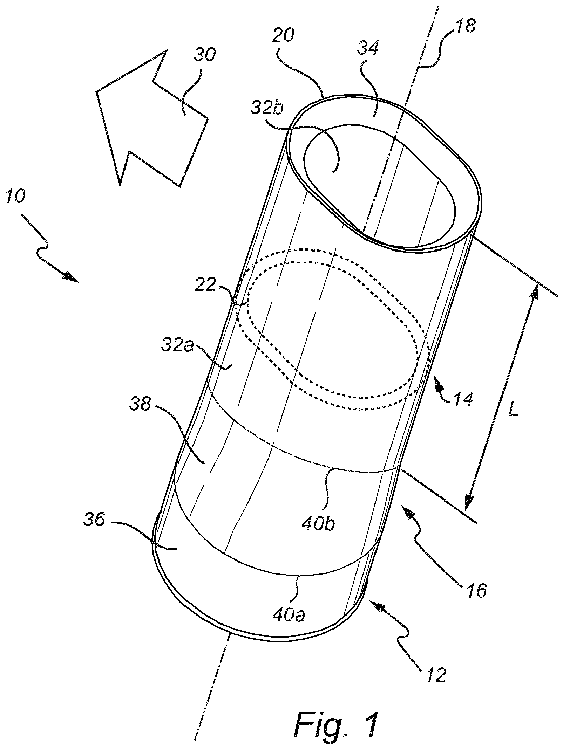

Fig. 1 shows a bicycle fork steerer tube 10 according to one or more embodiments of the present invention. In the following, the bicycle fork steerer tube 10 is referred to simply as steerer tube 10.

The steerer tube 10 can be made from a carbon fibre material, such as carbon fibre reinforced polymer or carbon fiber reinforced plastic or carbon fiber reinforced thermoplastic (or just carbon).

The steerer tube 10 has a lower portion 12, an upper portion 14, and an intermediate portion 16. The intermediate portion 16 interconnects the lower portion 12 and the upper portion 14. Specifically, the intermediate portion 16 may taper from the lower portion 12 to the upper portion 14. The lower portion 12 and the upper portion 14 could alternatively be referred to as a first portion 12 and a second portion 14, respectively.

As such, the (complete) steerer tube 10 may be hollow. Furthermore, the lower portion 12, the upper portion 14, and the intermediate portion 16 may be aligned along a longitudinal axis 18 of the steerer tube 10. The lower portion 12 is intended to attach to, or merge with, a fork crown.

The upper portion 14 extends from the intermediate portion 16 to the upper end 20 of the steerer tube 10. The upper end 20 of the steerer tube 10 could alternatively be referred to as the end 20 of the upper portion 14 opposite the intermediate portion 16.

According to the present invention, the upper portion 14 has an oval cross-section 22 all throughout the length L of the upper portion 14, i.e. from the intermediate portion 16 to the upper end 20 of the steerer tube 10. The length L could be in the range of 30-50 mm.

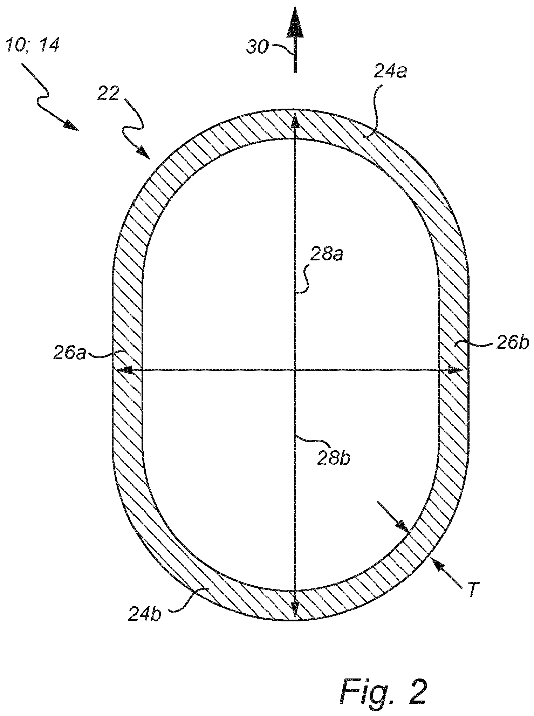

The cross-section 22 is preferably stadium-shaped, as illustrated in figures 1-2. That is, the upper portion 14 may have the shape of a hollow right stadium-shaped cylinder. The stadium-shaped cross-section 22 may have two opposite curved portions 24a-b and two opposite and parallel straight/flat portions 26a-b.

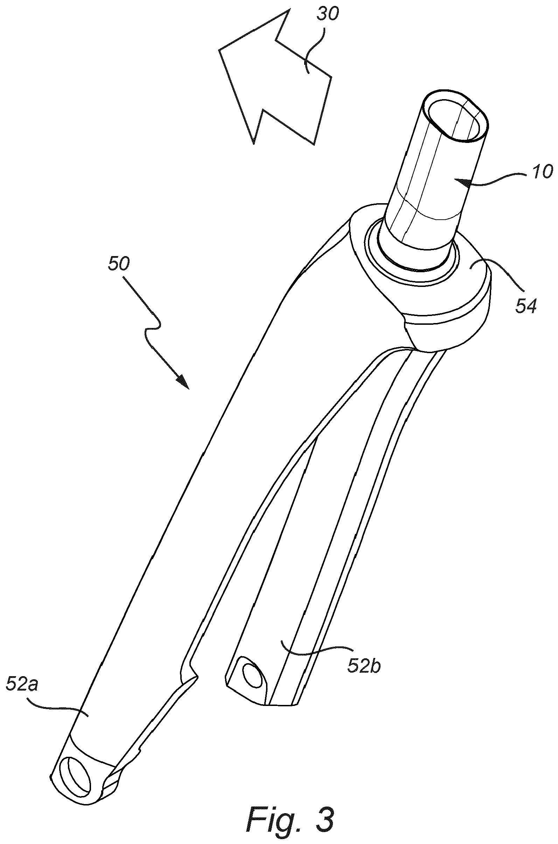

The cross-section 22 also has a major axis 28a and a minor axis 28b. The major axis 28a may be the longest distance of the cross-section 22, here extending between the two opposite curved portions 24a-b. The minor axis 28b may be the shortest distance of the cross-section 22, here extending between the two opposite and parallel straight/flat portions 26a-b. The length of the major axis 28a is preferably in the range of 125-135% of the length of the minor axis 28b. The major axis 28a may for example have a length in the range of 32-34 mm, such as 33.1 mm (± 0.25 mm). The minor axis 28b may have for example a length in the range of 24-26 mm, such as 25 mm (± 0.25 mm). The major axis 28a should extend in an intended plane of travel 30 of the bicycle fork steerer tube 10, as further appreciated from figures 3-5.

It is appreciated that the cross-section 22 throughout the length L of the upper portion 14 forms a non-circular cylindrical external surface 32a of the upper portion 14 as well as a non-circular cylindrical internal surface 32b of the upper portion 12. Hence, both the inside and the outside of the upper portion 14 of the steerer tube 10 are oval. Furthermore, the oval/stadium-shaped cross-section 22 may be uniform throughout the complete length L of the upper portion 14, except a chamfer 34 that may be present on the inside at the upper end 20. Also, upper portion 14 of the steerer tube 10 may have a uniform wall thickness T along the cross-section 22. The uniform wall thickness T may for example be in the range of 2.5-3 mm, such as 2.8 mm.

The lower portion 12 of the steerer tube 10 may include a circular cylindrical external surface 36, which advantageously can match a lower bearing (not shown). The length of the lower portion 12 could be in the range of 12-16 mm, such as 14 mm. The intermediate portion 16 of the steerer tube 10 may have an external surface 38 that transitions from a circular perimeter 40a adjoining the lower portion 12 to an at least partly narrower oval perimeter 40b adjoining the upper portion 14. The length of the intermediate portion 16 could be in the range of 18-22 mm, such as 20 mm. The ratio of the length L of the upper portion 14 to the complete length of the steerer tube 10 can for example be in the range of 0.45-0.55 (depending on the fork size).

Fig. 3 shows a bicycle fork 50 according to another aspect of the present invention. The bicycle fork 50 comprises two fork blades 52a-b joined by a fork crown 54. The bicycle fork 50 further comprises the steerer tube 10. The steerer tube 10 is attached to, or merged with, the fork crown 54, and extends generally upwards from the fork crown 54. Specifically, the lower portion 12 of the steerer tube 10 merges with the fork crown 54. Furthermore, the steerer tube 10 is here arranged with the major axis 28a of the upper portion 14 perpendicular to the width of the fork 50. The fork blades 52a-b, fork crown 54, and steerer tube 10 can all be made of carbon. The fork blades 52a-b, fork crown 54, and steerer tube 10 of the bicycle fork 50 can be manufactured as a single piece.

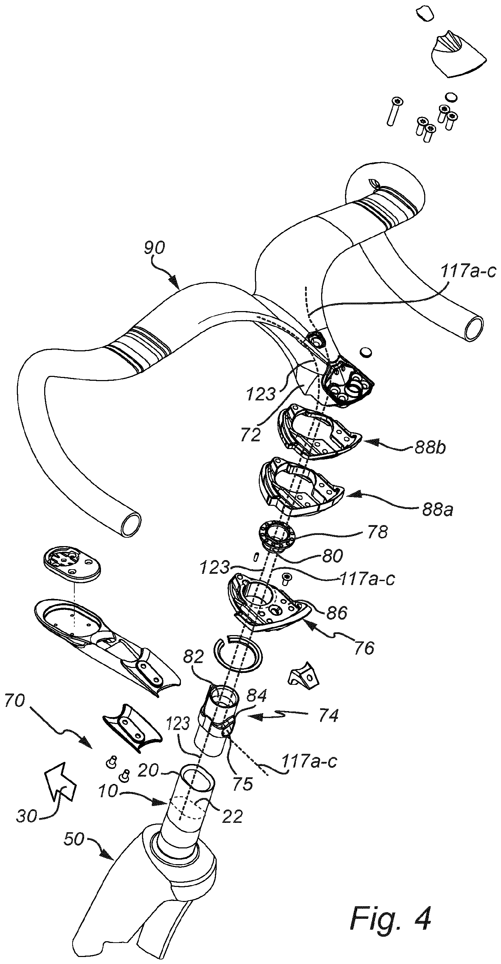

Fig. 4 shows a system 70 for fixing the bicycle fork 50 to a stem 72. Such a system 70 is described in more detail in applicant's co-pending application "SYSTEM FOR FIXING A BICYCLE FORK TO A STEM", the content of which herein is incorporated by reference.

The system 70 may comprise an insert 74 partly inserted into the upper portion 14 of the steerer tube 10 at the upper end 20. The insert 74 is preferably made of a metallic material and can have a rear opening 75 allowing at least one cable to be routed into for example a down tube. The system may further comprise a spacer member 76. The spacer member 76 is attached to the insert 74 by a fastening member 78, wherein the fastening member 78 may have an external threading 80 engaging an internal threading 82 of the insert 74. Namely, the spacer member 76 may be located on (a ledge 84 of) the insert 74 and fixed thanks to the fastening member 78. On its top, the spacer member 76 has a mounting surface 86. The mounting surface 86 is configured to allow top-mounting of the stem 72, either directly on the mounting surface 86 or via at least one intermediate spacer 88a-b. The illustrated stem 72 is integrated with a handlebar 90, namely a drop handlebar. Alternatively, the stem and handlebar could be separate items, with the stem connected to the handlebar by conventional means.

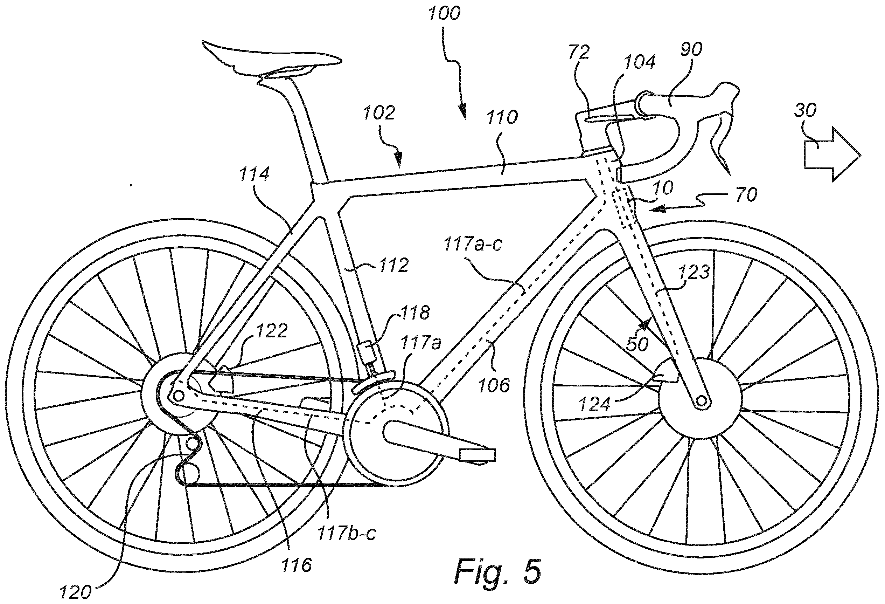

Turning to fig. 5, fig. 5 shows a bicycle 100 comprising the present steerer tube 10/fork 50 and system 70. The bicycle 100 may for example be a road racing bike.

Apart from the steerer tube 10 and fork 50 and system 70, the bicycle 100 comprises a frame 102 with a head tube 104 connected to a down tube 106. An internal opening is present between the head tube 104 and the down tube 106. The frame 102 also has a top tube 110, a seat tube 112, seat stays 114, and chain stays 116. Like the front fork 50, the frame 102 can be made from a carbon fibre material.

As applied to the bicycle 100, the steerer tube 10 is arranged in the head tube 104. The spacer member 76 is attached to the insert 74 and positioned above the head tube 104. The stem 72 (integrated with handlebar 90) is mounted to the spacer member 72, optionally via the intermediate spacers 88a-b. The rear opening 75 of the insert 74 is positioned above the upper end 20 of the steerer tube 10, but below the spacer member 76.

Furthermore, cables 117a-c from the handlebar 90 passes through the stem 72 and the hollow fastening member 78, into the insert 74, out from the insert 74 through the rear opening 75, into the down tube 106 via the aforementioned internal opening, and further to front derailleur 118, rear derailleur 120, and rear brake 122, respectively. Another cable 123 from the handlebar 90 passes though the stem 72, the hollow fastening member 78, the insert 74, the steerer tube 10, and further to front brake 124.

The bicycle 100 may further comprise two wheels, pedals, seat and post, an electric motor and battery pack (in case the bicycle 100 is an electric bicycle), etc.

The person skilled in the art realizes that the present invention by no means is limited to the embodiments described above. On the contrary, many modifications and variations are possible within the scope of the appended claims. For example, the present steerer tube 10 could alternatively be used with other, more conventional, systems/stems than system 70.

## Claims

1. A bicycle fork steerer tube (10), comprising:
a lower portion (12);
an upper portion (14); and
an intermediate portion (16) tapering from the lower portion to the upper portion,
wherein the upper portion extends from the intermediate portion to an upper end (20) of the bicycle fork steerer tube, and
wherein the upper portion has an oval cross-section (22) throughout its length (L) from the intermediate portion to the upper end of the bicycle fork steerer tube.

2. A bicycle fork steerer tube according to claim 1, wherein the oval cross-section (22) is a stadium-shaped cross-section.

3. A bicycle fork steerer tube according to claim 1 or 2, wherein the oval cross-section has a major axis (28a) and a minor axis (28b), and wherein the length of the major axis is in the range of 125-135% of the length of the minor axis.

4. A bicycle fork steerer tube according to any one of the preceding claims, wherein the oval cross-section has a major axis (28a) extending in an intended plane of travel (30) of the bicycle fork steerer tube.

5. A bicycle fork steerer tube according to any one of the preceding claims, wherein the oval cross-section throughout the length (L) of the upper portion forms a non-circular cylindrical external surface (32a) of the upper portion and a non-circular cylindrical internal surface (32b) of the upper portion.

6. A bicycle fork steerer tube according to any one of the preceding claims, wherein the oval cross-section is uniform throughout substantially the complete length (L) of the upper portion.

7. A bicycle fork steerer tube according to any one of the preceding claims, wherein the length (L) of the upper portion is in the range of 3-5 cm.

8. A bicycle fork steerer tube according to any one of the preceding claims, wherein the upper portion of the bicycle fork steerer tube has a uniform wall thickness (T) along the oval cross-section (22).

9. A bicycle fork steerer tube according to any one of the preceding claims, wherein the lower portion (12) includes a circular cylindrical external surface (36).

10. A bicycle fork steerer tube according to any one of the preceding claims, wherein the intermediate portion (16) has an external surface (38) that transitions from a circular perimeter (40a) adjoining the lower portion to an at least partly narrower oval perimeter (40b) adjoining the upper portion.

11. A bicycle fork steerer tube according to any one of the preceding claims, made from a carbon fibre material.

12. A bicycle fork steerer tube according to any one of the preceding claims, having a shape as illustrated in figures 1-2 of the drawings.

13. A bicycle fork (50), comprising:
at least one fork blade (52a-b);
a fork crown (54); and
a bicycle fork steerer tube (10) according to any one of the preceding claims.

14. A bicycle fork according to claim 13, wherein the lower portion of the bicycle fork steerer tube is attached to, or merges with, the fork crown.

15. A bicycle fork according to claim 13 or 14, made from a carbon fibre material.

16. A bicycle (100) comprising a bicycle fork steerer tube (10) according to any one of the claims 1-12 or a bicycle fork (50) according to any one of the claims 13-15.
